# EUROPEAN PATENT SPECIFICATION

(11) **EP 3 233 507 B1**
(45) Date of publication and mention of the grant of the patent: **21.06.2023**
(21) Application number: 15876471.2
(22) Date of filing: 08.01.2015
(51) Int. Cl.: B41M 3/00, B32B 15/08, B65D 35/02, B32B 7/12, B32B 15/20, B32B 27/08, B32B 27/30, B32B 27/32, B32B 27/34, B32B 1/08, B65D 35/12

(54) **HOLOGRAPHIC LAMINATE AND THE TUBE MADE THEREOF**
HOLOGRAFISCHES LAMINAT UND SCHLAUCH DARAUS
STRATIFIÉ HOLOGRAPHIQUE ET TUBE FABRIQUÉ À PARTIR DE CE DERNIER

(43) Date of publication of application: 25.10.2017
(73) Proprietor: Colgate-Palmolive Company, New York, NY 10022 (US)
(72) Inventor: WANG, Jun, Fort Washington, PA 19034 (US); LI, BoXian, Guangzhou Guangdong 510730 (CN); ZHANG, Guoxing, Piscataway, NJ 08854 (US)
(74) Representative: Schicker, Silvia
(86) International application number: PCT/CN2015/070352
(87) International publication number: WO 2016/109963

(56) References cited:
- WO-A1-2012/078129
- WO-A2-2011/083499
- CN-A- 1 467 081
- CN-A- 101 336 162
- CN-A- 101 610 911
- FR-A1- 2 757 102
- JP-A- H09 237 030
- US-A1- 2004 009 345
- US-A1- 2004 234 816
- US-A1- 2007 195 387

## Description

### BACKGROUND

Exterior packaging of consumer items is important in attracting the attention of a potential consumer such that the consumer will consider purchasing the product. Low-quality exterior packaging often suggests to the potential consumer that the product itself is of poor quality. Conversely, exterior packaging that is attractive and appears to be of high quality will often convey to the potential consumer that the product within is also of high quality.

In addition to exterior packaging, some products such as toothpaste, various food items, lotions, etc., include internal packaging within the exterior packaging. The interior packaging may be in the form of a flexible tube that stores the product until use. Some items may use the tube itself as the exterior packaging. In either case, the look and feel of the tube is important in either attracting a potential customer to consider the item for purchase, or in retaining the customer for subsequent sales and word-of-mouth advertising.

Holograms have been used for product packaging due, for example, to their attractive and high-quality appearance. Holograms have been limited to cellulosic materials (e.g., cardboard, paper, etc.) as other non-cellulosic materials do not lend themselves to the surface formation of a hologram, for example because other materials are chemically inert. Additionally, non-metallic holograms have been laminated with other layers to form a tube, for example, as described in US Patent 6,210,766. Non-metallic holograms are used, for example, because a metallized holographic layer can react with the contents of the tube if the tube side seam is not properly made, which may result in a delamination of the film in the area of the seal and the consequent failure of the seal.

As a further example, International Patent Application Publication No. 2011/083499 A2 discloses a method for forming a tube from a laminate, in which a hologramed pattern is provided on an outer layer of the laminate by transferring the hologramed pattern from a hologramed foil or film on the outer surface of the laminate by a heat and pressure process.

FR 2 757 102 A1 refers to a method for realizing a multilayer skirt of a flexible tube comprising a barrier effect layer with holographic patterns.

WO 2012/078129 A1 refers to a laminate tube having a block copolymer.

CN 101610911 A refers to a hologram appearing package image.

US 2004/0234816 A1 refers to a magnetic card.

Each of US 2004/0009345 A1, CN 101336162 A and CN 1467081 A refers to a process for making a tube laminate.

JP H09-237030 A refers to a transparent part hologram transfer sheet.

US 2007/0195387 A1 refers to a method for producing a holographic structure.

Formation of a sharp hologram requires at least two structures, including an embossed surface to generate light interference and a reflective surface to magnify the holographic effect. The formation of a holographic film can include depositing a metal onto a plastic film and then embossing the metallized film with a suitable grating pattern. Other methods of hologram manufacture include the formation of the reflective surface and the embossed surface on the same film surface, for example, by embossing a grating pattern onto a film surface and then depositing a thin aluminum coating to create the reflective surface.

Relocating decorative package and product information from an exterior carton to a product tube, such as a plastic tube, would provide the potential to omit the exterior packaging altogether while still displaying an attractive hologram to a potential consumer prior to product purchase. Reducing the amount of packaging reduces costs and packaging waste. As such, structures that include a hologram on the exterior of a plastic package and their methods of formation would be desirable.

### BRIEF SUMMARY

The following presents a simplified summary in order to provide a basic understanding of some aspects of one or more embodiments of the present teachings. This summary is not an extensive overview, nor is it intended to identify key or critical elements of the present teachings, nor to delineate the scope of the disclosure. Rather, its primary purpose is merely to present one or more concepts in simplified form as a prelude to the detailed description presented later.

A laminate structure can include a hologram having a reflective metal layer and a textured hologram layer, and an outer film interposed between the reflective metal layer and the textured hologram layer, wherein the outer film is transparent or translucent.

The present invention provides a method for forming a tube as defined in claim 1. Preferred embodiments are defined by the dependent claims. In an embodiment, a method for forming a tube for storing a product includes forming a tube wall laminate structure. The tube wall laminate structure is formed using a method including forming a barrier laminate as a barrier structure, wherein the barrier laminate comprises a first polyethylene (PE) layer, a barrier layer attached to the first PE layer with a first adhesive layer, and a second PE layer attached to the barrier laminate with a second adhesive layer, attaching the barrier laminate to a metallized laminate, wherein the metallized laminate includes a light-reflective metal layer and an inner plastic layer. The method for forming the tube includes attaching the metallized laminate to a hologram layer using a transparent or translucent PE outer film, wherein the PE outer film is interposed between the hologram layer and the metallized laminate. The metallized laminate is attached to the hologram layer using a process that occurs at a temperature of 38°C or less.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The accompanying drawings, which are incorporated in and constitute a part of this specification, illustrate embodiments and examples useful for the understanding of the present teachings and, together with the description, serve to explain the principles of the disclosure. The present invention will become more fully understood from the detailed description and the accompanying drawings, wherein:
FIG. 1 is a cross section of a portion of a tube wall laminate structure in accordance with an embodiment of the present teachings;
FIG. 2 is a cross section of a cylindrical tube structure in accordance with an embodiment of the present teachings;
FIG. 3 is a magnified view of a portion of the FIG. 2 structure after forming a self-sealing side seam; and
FIG. 4 is a plan view depicting a tube for storing and/or dispensing a product.

It should be noted that some details of the FIGS. have been simplified and are drawn to facilitate understanding of the present teachings rather than to maintain strict structural accuracy, detail, and scale.

### DETAILED DESCRIPTION

The following description of the preferred embodiments and of examples useful to understand the invention is merely exemplary in nature and is in no way intended to limit the invention, its application, or uses.

As used throughout, ranges are used as shorthand for describing each and every value that is within the range. Any value within the range can be selected as the terminus of the range.

As used herein, a "plastic" layer can include any suitable thermoplastic polymer. For example, a "plastic" layer can include, but is not limited to, a polyethylene, such as a high density polyethylene (HDPE), a low density polyethylene (LDPE), a linear low density polyethylene (LLDPE), a polypropylene such as a homo-propylene or co-propylene, polyethylene terephthalate (PET), ethylene vinyl alcohol (EVOH), functional copolymer of ethylene, for example, in tie (i.e., adhesive) layers such as ethylene-acrylic acid copolymer (EAA), ethylene-methyl acrylate copolymer (EMA), etc. A "plastic" layer includes a thermoplastic polymer that softens when heated to or above a melting temperature and solidifies when cooled to below the melting temperature.

Reference will now be made in detail to exemplary embodiments of the present teachings, examples of which are illustrated in the accompanying drawings. Wherever possible, the same reference numbers will be used throughout the drawings to refer to the same or like parts.

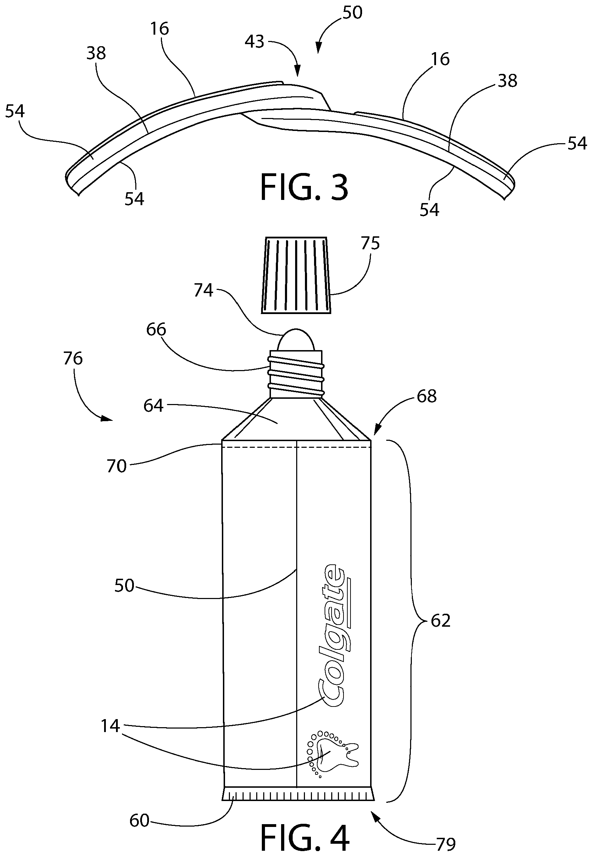

An example useful for the understanding of the present teachings can provide a plastic barrier laminate (i.e., a PBL tube laminate) that forms, in part, a tube 76 (FIG. 4) which encases, stores, and dispenses a product 74 (FIG. 4). The tube laminate that forms the tube 76 includes a visible hologram that can provide a premium appearance. An example useful for the understanding of the present teachings may also include the use of an extrusion lamination process to form the tube laminate, where the extrusion process uses a relatively high heat during the extrusion. High heat is typically avoided during the formation of a holographic laminate, as the heat will cause the deformation of a holographic film and result in a degraded holographic effect.

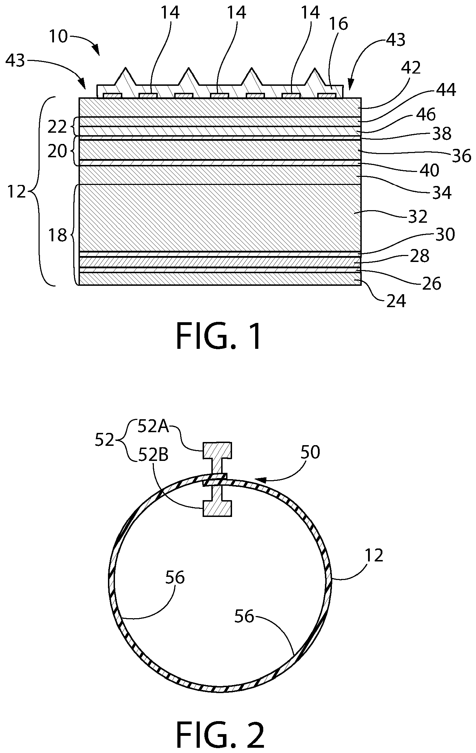

FIG. 1 is a cross section depicting a portion of a tube wall laminate structure 10 (i.e., a tube wall structure) in accordance with an embodiment of the present teachings. The FIG. 1 tube wall structure 10 includes a metallized polyethylene terephthalate (MPET) laminate structure 12, an optional printed pattern 14 over the MPET laminate structure 12, and a hologram layer 16 over MPET laminate structure 12. If used, the printed pattern 14 is interposed (i.e., sandwiched) between the MPET laminate structure 12 and the hologram layer 16. Each of the layers is discussed in detail below.

A barrier laminate can include the MPET laminate structure 12 as depicted, which may include an ethylene vinyl alcohol (i.e., EVOH) copolymer laminate 18, an MPET assembly 20, and a polyethylene and ethylene acrylic acid copolymer (i.e., PE/EAA) assembly 22. Other materials that replace or are used in addition to these materials are also contemplated. For example, a barrier laminate can include a barrier layer having one or more of a metal layer such as an aluminum foil, a metal alloy, nylon or other polyamide or polymer, etc., and combinations thereof.

The EVOH laminate 18 includes a first polyethylene (i.e., first PE) layer 24, a first adhesive (i.e., a first tie) layer 26, an EVOH copolymer layer 28, a second tie layer 30, and a second PE layer 32. As used herein, a "tie" layer is one or more adhesive layers that adheres two layers together. The EVOH copolymer laminate 18 provides a physical and chemical barrier laminate structure that prevents contact and reaction of the product 74 (FIG. 4) that is encased within the tube 76 (FIG. 4) with, for example, ambient oxygen that could degrade product flavor and aroma. The first PE layer may have a thickness of from about 35 micrometers (µm) to about 45 µm, for example about 40 µm, which reduces flavor scalping of the product within the tube while still maintaining a seal at a side seam 50 and an end seam 60 (FIG. 4) as discussed below. The second PE layer 32 may have a thickness of from about 100 micrometers (µm) to about 200 µm, or from about 150 µm to about 180 µm, for example about 170 µm. The thickness of the second PE layer 32 may be adjusted depending on the required stiffness of the tube 76 and the quality of the side seam 50. Each of the first tie layer 26 and the second tie layer 28 may have a thickness of from about 10 µm to about 20 µm. The EVOH copolymer layer 28 may have a thickness of from about 10 µm to about 40 µm, or from about 15 µm to about 25 µm. The EVOH copolymer laminate 18 may therefore have an overall thickness of from about 160 µm to about 320 µm. The layers 24-32 that form the EVOH copolymer laminate 18 may be co-extruded and cast to form a completed EVOH laminate 18. During use of the tube 76, the first PE layer 24 is exposed to the product 74 within the tube 76.

A third PE layer 34 is used to bond the EVOH copolymer laminate 18 to the MPET assembly 20. The third PE layer may have a thickness of from about 25 µm to about 55 µm, or from about 35 µm to about 45 µm, or about 40 µm. The third PE layer 34 may be melt extruded between the EVOH copolymer laminate 18 and the MPET assembly 20 in a standard extrusion lamination process at an extruder's die temperature of from about 300°C to about 340°C, then cooled, to adhere the MPET laminate 18 to the MPET assembly 20.

The MPET assembly 20 can include a substrate layer 36 which is metallized on an upper side with a metal layer 38. The substrate layer 36 provides, for example, a primer layer to provide sealing for laminating to the third PE layer 34. The substrate layer 36 may be a polyethylene terephthalate (i.e., PET) layer, a polypropylene, a cellulose, etc. The substrate layer 36 may have a thickness of from about 6 µm to about 25 µm, for example about 9 µm. The metal layer 38 coats the substrate layer 36 and enhances the appearance of the hologram layer 16 by providing a highly reflective surface under the hologram layer 16 that reflects light. The light-reflective metal layer 38 may include, for example, one or more of aluminum, silver, or another suitable metal or metal alloy. The metal layer 38 may have a thickness of from about 1 µm to about 10 µm, or from about 2 µm to about 6 µm. The MPET assembly 20 includes an adhesion layer 40 to ensure bonding of the MPET assembly 20 to the third PE layer 34. The adhesion layer 40 may be a commercial aqueous primer, for example polyethylenimine (PEI). The adhesion layer 40 may be a conventional two-component polyurethane for PET, or another suitable adhesion material.

An inner surface of the MPET laminate structure 12 is provided by the first PE layer 24. An outer surface of the MPET laminate structure 12 is provided by a transparent (clear) or translucent outer film or outer layer 42, for example an outer PE film 42, that provides good visibility to the metal layer 38. The outer PE film 42 of the MPET laminate structure 12 may be a low haze film, and may have a haze of from about 3% to about 15%, or a haze of 5% or less, or less than 5%. The outer PE film 42 may be a blown film having a symmetrical 3-layer structure, where each layer includes a blend of metallocene low density polyethylene (mLLDPE) and low density polyethylene (LDPE). The outer PE film 42 may have a thickness of from about 30 µm to about 80 µm, or from about 40 µm to about 50 µm.

The outer PE film 42 may be attached to the MPET assembly 20 using the co-extruded PE/EAA assembly 22, which functions as a bonding or adhesive assembly. The PE/EAA assembly 22 can include a PE layer 44 and an EAA layer 46 as tie layers. The tie layers, including the outer PE film 42, as described herein may include LDPE and/or a functional copolymer of PE, for example ethylene acrylic acid copolymer (EAA), ethylene methyl acrylate copolymer (EMA), ethylene methyl methacrylate copolymer (EMMA), etc. Each of the tie layers may be from about 5 µm to about 30 µm, or from about 10 µm to about 20 µm.

A total thickness of the MPET laminate structure 12 may be from about 200 µm to about 350 µm, or from about 250 µm to about 300 µm.

After the MPET laminate structure 12 is formed, it may be cut to a finished size using, for example, a blade, a punch, or another cutting technique. The finished size will depend on the use. After cutting, the MPET laminate structure 12 provides a finished MPET laminate structure or "blank" for a body of the completed tube.

Subsequently, the finished MPET laminate structure 12 may be flattened and printed with the optional printed pattern 14. The optional printed pattern 14 may include an aqueous or wax ink, a plasticized decal, etc.

After placing the printed pattern 14, the hologram layer 16 may be placed onto the outer PE film 42 and the printed pattern 14. The hologram layer 16 may be formed using a cast-and-cure process or another suitable process that forms a textured layer with optical properties sufficient for a hologram layer 16. In a cast-and-cure process, a wet coating including a layer of an ultraviolet- (UV) curable paste is dispensed onto the outer PE film 42 and the printed pattern 14. A shaped, contoured, or textured casting film having a hologram pattern is placed within the wet coating such that the wet coating conforms to the shape of the casting film. While the casting film and the wet coating are in physical contact, UV light is passed through the casting film to cure the wet coating in the shape of the openings within contoured casting film to form the hologram layer 16 having a hologram pattern. The hologram layer 16 and the casting film are then delaminated from each other to result in the completed tube wall structure 10. The hologram 16 may be attached to the MPET laminate structure 12 using, for example, an adhesive layer (not depicted for simplicity). The hologram layer 16 may be formed over less than the entire width of the outer PE film 42 as shown in FIG. 1 such that the outer PE film 42 is exposed at exposed side regions 43 along the side seam 50 (FIGS. 2-4). The cast-and-cure process is a process that can occur at a low temperature, for example at 60°C or less, or 38°C or less, or 30°C or less. Thus while formation of the MPET laminate structure 12 includes the use of higher temperatures, for example up to about 340°C or more, the formation of the hologram occurs at much lower temperatures to provide the tube wall structure 10. The hologram 16 is thereby not exposed to high temperatures during formation of the tube wall structure 10, which could degrade or damage the hologram 16.

The tube wall structure 10 thus includes a hologram layer 16 that is separated from a reflective metal layer 38 by a clear (transparent) or translucent plastic film 42. The reflective metal layer 38 and the hologram layer 16 are formed from two different layers and two different materials. This is in contrast to holograms where a reflective layer and a hologram layer from the same layer and material, and holograms where a hologram layer is formed directly on a reflective layer. Various portions of the MPET laminate structure 12 may be formed using a heating process that may otherwise damage the hologram layer 16. Since the hologram layer 16 is not added until the MPET laminate structure 12 has been formed, the hologram layer 16 need not be subjected to high heat. A high heat would deform the hologram layer, resulting in the loss of the holographic effect.

After forming the finished tube wall structure 10, including the MPET laminate structure 12, the patterned layer 14, and the hologram layer 16, the tube may be assembled. The finished tube wall structure 10 may be rolled and overlapped into a cylinder as depicted in the cross section of FIG. 2, such that a first end of the MPET laminate structure 12 overlaps a second end of the MPET laminate structure 12. Because the sides of the MPET laminate structure 12 have an exposed metal layer 38 as depicted in FIG. 1, the metal layer 38 on the inside of the tube would be exposed to the product within the completed tube. However, the product can chemically react with the metal layer 38 to result in delamination of the MPET laminate structure 12 and/or contaminated product within the tube, and thus the metal layer 38 must be sealed to prevent physical contact between the product and the metal layer 38. In an embodiment, a self-sealing side seam 50 can be formed as depicted in FIG. 2, in which the overlapping seam 50 is positioned and held under pressure by a clamp 52. A clamping pressure exerted by an outer clamp portion 52A and an inner clamp portion 52B onto the overlapped seam 50 can be from about 0.1 bar to about 2.0 bars. The clamp 52 may be heated which, in turn, heats the portion of the MPET laminate structure 12 that is positioned within the clamp 52, and more particularly the plastic layers, including the PE layers 24, 32, 34, 42, 44, the functional ethylene copolymer layers 26, 28, 30, 46, and the PET layer 36. The heating and softening the PE layers is localized in the region of contact between the tube wall structure 10 and the clamp 52, and the clamp 52 heats and softens the PE layers only in proximity to the overlap. The outer clamp portion 52A may be heated to a first temperature of between about 200°C and about 220°C, for example about 210°C, and the inner clamp portion 52B may be heated to a second temperature of between about 115°C and about 135°C, for example about 125°C. The plastic layers 24, 32, 34, 36 42, 44 may be heated by the clamp 52 to a temperature of from about 100°C to about 250°C, or to a temperature sufficient to soften, melt, and flow the plastic layers without excessively decreasing their viscosity. The outer clamp portion 52A may be heated to a different temperature than the inner clamp portion 52B. The heating and pressure from the clamp 52 causes the plastic layers 24, 32, 34, 36 42, 44 to soften and flow, particularly over the exposed end of the metal layer 38, to seal the end of the metal layer 38 as depicted in the simplified magnified cross section of FIG. 3. For simplicity, FIG. 3 depicts the plurality of plastic layers 24, 32, 34, 36 42, 44 as a single plastic layer 54.

Because the exposed side regions 43 along the side seam 50 are uncovered by the hologram layer 16, the first PE layer 24 physically contacts the outer PE film 42 at the overlapping side seam 50 during this process. When the first PE layer 24 and the outer PE film 42 soften, they provide a sealed side seam 50, and encase or encapsulate the ends of the metal layer 38 in the plastic of the first PE layer 24 and the outer film 42 to prevent physical contact, and chemical interaction, between the product 74 and the metal layer 38.

Subsequently, the FIG. 3 structure is cooled. Once the FIG. 3 heated layers are cooled, the ends of the metal layer 38 are encased or encapsulated in plastic and thus cannot physically contact the product within the tube 76. Further, the seal between the first PE layer 24 and the outer PE film 42 provides a fluid-tight seal and prevents leakage of the product 74 within the tube 76 through the seal.

Subsequently, a tube shoulder 64 having a threaded exit nozzle 66 can be attached to the open end 68 of the tube body 62. The tube shoulder 64 may include an internal ridge (i.e., flange) 70 that fits within the open end 68 of the tube body 62 to prevent physical contact between the product 74 within the tube body 62 and the metal layer 38. The tube shoulder 64 may be heat sealed to the tube body 62 to attach the tube shoulder 64 to the tube body 62.

After attachment of the tube shoulder 64 and a threaded cap 75 onto the threaded exit nozzle 66, the tube 76 may be filled with a desired product 74 through the open end of the cylinder (at a lower end 79 of the tube body 62 in the FIG. 4 orientation). The product 74 may include, for example, a toothpaste, a food item, a lotion, etc.

After placement of the product 74 within the tube 76, the open end of the tube body 62 can be crimped such that a first section of the first PE layer 24 physically contacts a second section of the first PE layer at the inner wall 56 of the cylinder. The first PE layer 24 is heated and softened to form a self-sealing end seal 60 as depicted in the plan view of FIG. 4. Thus the tube wall structure 10 of FIG. 1 forms a tube body 62 of FIG. 4. Any deformation of the hologram layer 16 from the application of heat is localized to the area of the crimp 60, and thus any loss in the holographic effect is also localized to the relatively small region of the crimp 60. In another arrangement, the hologram layer 16 is formed such that it does not extend to the lower edge of the laminate 10 to provide a region 43 (FIG. 1) at the lower end 79 of the tube body 62, and thus the hologram layer 16 is not heated during formation of the crimp 60.

As depicted in the plan view of the tube in FIG. 4, the patterned layer 14 may include text, graphics, product information or use instructions, etc.

An embodiment of the present teachings can include a base laminate instead of the plastic barrier laminate (i.e., PBL) described above. For example, an embossed hologram structure separated from a MPET laminate by a plastic layer such as the outer film as discussed above may be formed on various types of base substrates. Without intending to limit possible base substrates, a base substrate may include an aluminum barrier laminate (i.e., ABL), a cellulosic substrate, a PET substrate, a polypropylene substrate, etc. Additionally, an MPET laminate separated from a hologram layer by a plastic layer may function sufficiently as a standalone layer without requiring a base substrate. Further, the MPET laminate as described above may instead be other metallized layers such as metallized polypropylene (MBOPP), a metallized cellulosic film, etc., which are represented in the FIGS., for example by the metal layer 38 covering the substrate layer 36. Various other embodiments are contemplated, which will become apparent to an artisan of ordinary skill in the art from the description herein.

Thus an example useful for understanding the present teachings includes a tube for storing and dispensing a product. An exterior surface of the tube includes a hologram to provide a tube having a premium appearance. The tube includes a metal layer to provide a highly reflective surface and a hologram layer to provide a holographic appearance. A MPET laminate structure including the metal layer is formed separately from the hologram layer. Thus the MPET laminate structure may be subjected to high heat during formation that would damage the hologram layer. The tube may be formed to include a self-sealing side seam and a self-sealing end seam, thereby simplifying manufacture and reducing costs.

Notwithstanding that the numerical ranges and parameters setting forth the broad scope of the present teachings are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all sub-ranges subsumed therein. For example, a range of "less than 10" can include any and all sub-ranges between (and including) the minimum value of zero and the maximum value of 10, that is, any and all sub-ranges having a minimum value of equal to or greater than zero and a maximum value of equal to or less than 10, e.g., 1 to 5. In certain cases, the numerical values as stated for the parameter can take on negative values. In this case, the example value of range stated as "less than 10" can assume negative values, e.g. - 1, -2, -3, -10, -20, -30, etc.

While the present teachings have been illustrated with respect to one or more implementations, alterations and/or modifications can be made to the illustrated examples without departing from the scope of the appended claims. For example, it will be appreciated that while the process is described as a series of acts or events, the present teachings are not limited by the ordering of such acts or events. Some acts may occur in different orders and/or concurrently with other acts or events apart from those described herein. Also, not all process stages may be required to implement a methodology in accordance with one or more aspects or embodiments of the present teachings. It will be appreciated that structural components and/or processing stages can be added or existing structural components and/or processing stages can be removed or modified. Further, one or more of the acts depicted herein may be carried out in one or more separate acts and/or phases. Furthermore, to the extent that the terms "including," "includes," "having," "has," "with," or variants thereof are used in either the detailed description and the claims, such terms are intended to be inclusive in a manner similar to the term "comprising." The term "at least one of" is used to mean one or more of the listed items can be selected. As used herein, the term "one or more of" with respect to a listing of items such as, for example, A and B, means A alone, B alone, or both A and B. Further, in the discussion and claims herein, the term "on" used with respect to two materials, one "on" the other, means at least some contact between the materials, while "over" means the materials are in proximity, but possibly with one or more additional intervening materials such that contact is possible but not required. Neither "on" nor "over" implies any directionality as used herein. The term "conformal" describes a coating material in which angles of the underlying material are preserved by the conformal material. The term "about" indicates that the value listed may be somewhat altered, as long as the alteration does not result in nonconformance of the process or structure to the illustrated embodiment. Finally, "exemplary" indicates the description is used as an example, rather than implying that it is an ideal. Other embodiments of the present teachings will be apparent to those skilled in the art from consideration of the specification and practice of the disclosure herein. It is intended that the specification and examples be considered as
exemplary only, with a true scope of the present teachings being indicated by the following claims.

Terms of relative position as used in this application are defined based on a plane parallel to the conventional plane or working surface of a workpiece, regardless of the orientation of the workpiece. The term "horizontal" or "lateral" as used in this application is defined as a plane parallel to the conventional plane or working surface of a workpiece, regardless of the orientation of the workpiece. The term "vertical" refers to a direction perpendicular to the horizontal. Terms such as "on," "side" (as in "sidewall"), "higher," "lower," "over," "top," and "under" are defined with respect to the conventional plane or working surface being on the top surface of the workpiece, regardless of the orientation of the workpiece.

## Claims

1. A method for forming a tube (76) for storing a product (74), comprising:
forming a tube wall laminate structure (10) using a method comprising:
forming a barrier laminate (18) as a barrier structure, wherein the barrier laminate (18) comprises a first polyethylene (PE) layer (24), a barrier layer (28) attached to the first PE layer (24) with a first adhesive layer (26), and a second PE layer (32) attached to the barrier laminate (28) with a second adhesive layer (30);
attaching the barrier laminate (18) to a metallized laminate, wherein the metallized laminate comprises a light-reflective metal layer (38) and an inner plastic layer; and
attaching the metallized laminate to a hologram layer (16) using a transparent or translucent PE outer film (42), wherein the PE outer film (42) is interposed between the hologram layer (16) and the metallized laminate,
wherein the metallized laminate is attached to the hologram layer (16) using a process that occurs at a temperature of 38°C or less.

2. The method of claim 1, further comprising:
forming the barrier layer (18) from at least one of ethylene vinyl alcohol (EVOH) copolymer, an aluminum foil, a metal, a metal alloy, nylon, or a polymer, and combinations thereof;
forming a patterned layer (14) on the PE outer film (42) prior to attaching the metallized laminate to the hologram layer (16) wherein, subsequent to attaching the hologram layer (16), the patterned layer (14) is interposed between the PE outer film (42) and the hologram layer (16).

3. The method of claim 2, further comprising forming a self-sealing side seam (50) using a method comprising:
overlapping a first end of the tube wall laminate structure (10) with a second end of the tube wall laminate structure (10) to form an overlap, wherein the outer film (42) physically contacts a portion of the first PE layer (24) at the overlap;
clamping the overlap using a clamp (52);
heating and softening the PE layers (24, 32) at the overlap; and
cooling and solidifying the PE layers (24, 32) at the overlap, thereby forming the self-sealing side seam (50).

4. The method of claim 3 , further comprising heating and softening the PE layers (24, 32) only in proximity to the overlap using the clamp (52) to heat the PE layers (24, 32).

5. The method of claim 3, further comprising covering an end of the metal layer (38) with at least one of the first PE layer (24), the second PE layer (32), and the PE outer film (42) during the heating and softening of the portion of the first PE layer (24).

6. The method of claim 3, further comprising forming a self-sealing end seam (60) using a method comprising:
rolling the tube wall laminate structure (10) to form the overlap and to further form a cylinder having a first end and a second end;
crimping the first end of the cylinder to form a first crimped end such that a first section of the first PE layer (24) physically contacts a second section of the first PE layer (24) at an inner wall of the cylinder;
heating and softening the first PE layer (24) at the crimped first end of the cylinder; and
cooling and solidifying the first PE layer (24) at the crimped first end of the cylinder, thereby forming the self-sealing end seam (60), and
optionally, further comprising attaching a tube shoulder (64) to the second end of the cylinder and placing the product (74) within the tube (76), wherein the product (74) physically contacts the first PE layer (24).

## Patentansprüche

1. Verfahren zur Herstellung eines Rohrs (76) zur Lagerung eines Produkts (74), das umfasst:
Ausbilden einer Rohrwandlaminatstruktur (10) unter Verwendung eines Verfahrens, das umfasst:
Ausbilden eines Barrierelaminats (18) als eine Barrierestruktur, wobei das Barrierelaminat (18) eine erste Polyethylen (PE)-Schicht (24), eine Barriereschicht (28), die mit einer ersten Klebstoffschicht (26) an der ersten PE-Schicht (24) befestigt ist, und eine zweite PE-Schicht (32), die mit einer zweiten Klebstoffschicht (30) an dem Barrierelaminat (28) befestigt ist, umfasst
Befestigen des Barrierelaminats (18) an einem metallisierten Laminat, wobei das metallisierte Laminat eine lichtreflektierende Metallschicht (38) und eine innere Kunststoffschicht umfasst; und
Befestigen des metallisierten Laminats an einer Hologrammschicht (16) unter Verwendung einer transparenten oder transluzenten PE-Außenfolie (42), wobei die PE-Außenfolie (42) zwischen der Hologrammschicht (16) und dem metallisierten Laminat angeordnet ist,
wobei das metallisierte Laminat mittels eines Verfahrens an der Hologrammschicht (16) befestigt wird, das bei einer Temperatur von 38°C oder weniger stattfindet.

2. Verfahren nach Anspruch 1, das ferner umfasst:
Ausbilden der Barriereschicht (18) aus einem Ethylen-Vinyl-Alkohol (EVOH)-Copolymer, einer Aluminiumfolie, einem Metall, einer Metalllegierung, Nylon und/ oder einem Polymer und Kombinationen davon;
Ausbilden einer gemusterten Schicht (14) auf der PE-Außenfolie (42) vor dem Befestigen des metallisierten Laminats an der Hologrammschicht (16), wobei nach dem Befestigen der Hologrammschicht (16) die gemusterte Schicht (14) zwischen der PE-Außenfolie (42) und der Hologrammschicht (16) angeordnet ist.

3. Verfahren nach Anspruch 2, das ferner das Ausbilden einer selbstdichtenden Seitennaht (50) unter Verwendung eines Verfahrens umfasst, welches umfasst:
Überlappen eines ersten Endes der Rohrwandlaminatstruktur (10) mit einem zweiten Ende der Rohrwandlaminatstruktur (10), um eine Überlappung zu bilden, wobei die Außenfolie (42) einen Abschnitt der ersten PE-Schicht (24) an der Überlappung physisch berührt;
Festklemmen der Überlappung unter Verwendung einer Klammer (52);
Erwärmen und Erweichen der PE-Schichten (24, 32) an der Überlappung; und
Abkühlen und Verfestigen der PE-Schichten (24, 32) an der Überlappung, wodurch die selbstdichtende Seitennaht (50) ausgebildet wird.

4. Verfahren nach Anspruch 3, das ferner das Erwärmen und Erweichen der PE-Schichten (24, 32) nur in der Nähe der Überlappung unter Verwendung der Klammer (52) zum Erwärmen der PE-Schichten (24, 32) umfasst.

5. Verfahren nach Anspruch 3, das ferner das Abdecken eines Endes der Metallschicht (38) mit der ersten PE-Schicht (24), der zweiten PE-Schicht (32) und/oder der PE-Außenfolie (42) während des Erwärmens und Erweichens des Abschnitts der ersten PE-Schicht (24) umfasst.

6. Verfahren nach Anspruch 3, das ferner das Ausbilden einer selbstdichtenden Endnaht (60) unter Verwendung eines Verfahrens umfasst, welches umfasst:
Walzen der Rohrwandlaminatstruktur (10) zur Ausbildung der Überlappung und ferner zur Ausbildung eines Zylinders mit einem ersten Ende und einem zweiten Ende;
Crimpen des ersten Endes des Zylinders zur Ausbildung eines ersten gecrimpten Endes, so dass ein erster Abschnitt der ersten PE-Schicht (24) einen zweiten Abschnitt der ersten PE-Schicht (24) an einer Innenwand des Zylinders physikalisch kontaktiert;
Erwärmen und Erweichen der ersten PE-Schicht (24) an dem gecrimpten ersten Ende des Zylinders; und
Abkühlen und Verfestigen der ersten PE-Schicht (24) an dem gecrimpten ersten Ende des Zylinders, wodurch die selbstdichtende Endnaht (60) gebildet wird, und
das optional ferner das Befestigen einer Rohrschulter (64) an dem zweiten Ende des Zylinders und das Platzieren des Produkts (74) innerhalb des Rohrs (76) umfasst, wobei das Produkt (74) die erste PE-Schicht (24) physikalisch kontaktiert.

## Revendications

1. Procédé de formation d'un tube (76) destiné à stocker un produit (74), consistant à :
former une structure stratifiée de paroi de tube (10) à l'aide d'un procédé consistant à :
former un stratifié barrière (18) en tant que structure barrière, dans lequel le stratifié barrière (18) comprend une première couche (24) en polyéthylène (PE), une couche barrière (28) fixée à la première couche en PE (24) ay moyen d'une première couche adhésive (26), et une seconde couche en PE (32) fixée au stratifié barrière (28) au moyen d'une seconde couche adhésive (30) ;
fixer le stratifié barrière (18) à un stratifié métallisé, dans lequel le stratifié métallisé comprend une couche de métal (38) réfléchissant la lumière et une couche interne en plastique ; et
fixer le stratifié métallisé à une couche d'hologramme (16) à l'aide d'un film externe (42) transparent ou translucide en PE, dans lequel le film externe (42) en PE est intercalé entre la couche d'hologramme (16) et le stratifié métallisé,
dans lequel le stratifié métallisé est fixé à la couche d'hologramme (16) à l'aide d'un processus qui se produit à une température de 38°C ou moins.

2. Procédé selon la revendication 1, consistant en outre à :
former la couche barrière (18) constituée au moins de l'un parmi le copolymère d'éthylène alcool de vinyle (EVOH), une feuille en aluminium, un métal, un alliage de métal, le nylon, ou un polymère, et leurs combinaisons ;
former une couche à motifs (14) sur le film externe (42) en PE avant de fixer le stratifié métallisé à la couche d'hologramme (16), dans lequel, à la suite de la fixation de la couche d'hologramme (16), la couche à motifs (14) est intercalée entre le film externe (42) en PE et la couche d'hologramme (16).

3. Procédé selon la revendication 2, consistant en outre à former une jonction latérale auto-adhésive (50) à l'aide d'un procédé consistant à :
faire chevaucher une première extrémité de la structure stratifiée de paroi de tube (10) par une seconde extrémité de la structure stratifiée de paroi de tube (10) pour former un chevauchement, dans lequel le film externe (42) entre en contact physique avec une partie de la première couche (24) en PE au niveau du chevauchement ;
retenir le chevauchement à l'aide d'une pince (52) ;
chauffer et assouplir les couches en PE (24, 32) au niveau du chevauchement ; et
refroidir et solidifier les couches en PE (24, 32) au niveau du chevauchement, formant ainsi la jonction latérale auto-adhésive (50).

4. Procédé selon la revendication 3, consistant en outre à chauffer et assouplir les couches en PE (24, 32) uniquement dans la proximité du chevauchement à l'aide d'une pince (52) pour chauffer les couches en PE (24, 32).

5. Procédé selon la revendication 3, consistant en outre à recouvrir une extrémité de la couche de métal (38) à l'aide d'au moins l'une parmi la première couche en PE (24), la seconde couche en PE (32), et le film externe en PE (42) pendant le chauffage et l'assouplissement de la partie de la première couche en PE (24).

6. Procédé selon la revendication 3, consistant en outre à former une jonction latérale auto-adhésive (60) à l'aide d'un procédé consistant à :
laminer la structure stratifiée de paroi de tube (10) pour former le chevauchement et pour former en outre un cylindre ayant une première extrémité et une seconde extrémité ;
sertir la première extrémité du cylindre pour former une première extrémité sertie de sorte qu'une première section de la première couche en PE (24) entre en contact physique avec une seconde section de la première couche en PE (24) au niveau d'une paroi interne du cylindre ;
chauffer et assouplir la première couche en PE (24) au niveau de la première extrémité sertie du cylindre ;
et
refroidir et solidifier la première couche en PE (24) au niveau de la première extrémité sertie du cylindre, formant ainsi la jonction d'extrémité auto-adhésive (60), et
éventuellement, consistant en outre à fixer un épaulement de tube (64) à la seconde extrémité du cylindre et placer le produit (74) à l'intérieur du tube (76), dans lequel le produit (74) entre en contact physique avec la première couche en PE (24).
